# EUROPEAN PATENT SPECIFICATION

(11) **EP 2 101 504 B1**
(45) Date of publication and mention of the grant of the patent: **25.07.2012**
(21) Application number: 09003377.0
(22) Date of filing: 09.03.2009
(51) Int. Cl.: H04N 7/26, H04N 7/50

(54) **Video coding using template matching**
Videokodierung mittels Mustervergleich
Codage vidéo utilisant la mise en correspondance avec un modèle

(30) Priority: 09.03.2008 US 35015 P; 12.03.2008 US 35746 P; 13.03.2008 US 36085 P; 08.12.2008 US 120486 P; 09.03.2009 KR 20090019808
(43) Date of publication of application: 16.09.2009
(73) Proprietor: LG Electronics Inc., Seoul 150-721 (KR)
(72) Inventor: Park, Seung Wook, Seoul 137-130 (KR); Kim, Jung Sun, Seoul 137-130 (KR); Park, Joon Young, Seoul 137-130 (KR); Choi, Young Hee, Seoul 137-130 (KR); Jeon, Byeong Moon, Seoul 137-130 (KR); Jeon, Yong Joon, Seoul 137-130 (KR)
(74) Representative: Katérle, Axel

(56) References cited:
- US-A1- 2007 019 726
- PENG YIN ET AL: "Localized Weighted Prediction for Video Coding" IEEE,, 23 May 2005 (2005-05-23), pages 4365-4368, XP010816640 ISBN: 978-0-7803-8834-5
- THIOW KENG TAN ET AL: "Intra Prediction by Template Matching" IMAGE PROCESSING, 2006 IEEE INTERNATIONAL CONFERENCE ON, IEEE, PI, 1 October 2006 (2006-10-01), pages 1693-1696, XP031048981 ISBN: 978-1-4244-0480-3

## Description

### TECHNICAL FIELD

The present invention relates to an apparatus for encoding or decoding a video signal and method.

### BACKGROUND ART

When source provider transmits an encoded video signal to a decoder, a method of removing temporal redundancy and spatial redundancy is used to enhance a compression ratio of a video signal, i.e., an intra predicting method and an inter predicting method are used.

US 2007/019723 A1 may be construed to disclose a method (and a related apparatus) comprising obtaining an intra prediction mode of the current block using the intra prediction mode of a template region, and obtaining a prediction value of the current block using the intra prediction mode of the current block.

### DISCLOSURE OF THE INVENTION

### TECHNICAL PROBLEM

An object of the present invention is to reduce a bit size allocated to intra prediction mode.

### TECHNICAL SOLUTION

The present invention is characterized in that a decoder derives an intra prediction mode of a current block using a template region without transmitting the intra-prediction mode to the decoder.

### ADVANTAGEOUS EFFECTS

Accordingly, the present invention provides the following effects or advantages.

First of all, the present invention is able to reduce a bit size transmitted to a decoder in a manner that the decoder derives an intra prediction mode of a current block using a template region without transmitting the intra prediction mode to the decoder, thereby enhances coding efficiency of video signal processing.

### DESCRIPTION OF DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 shows an example of a template region and a target region;
FIG. 2 is a flowchart of a sequence for a decoder to determine an intra prediction mode of a current block using a template region according to a first embodiment of the present invention;
FIG. 3 shows a template region adjacent to a current block and pixels neighboring to the corresponding template region, which are used in used in obtaining an intra prediction mode of the template region adjacent to the current block according to a first embodiment of the present invention;

### BEST MODE

Additional features and advantages of the invention will be set forth in the description which follows, and in part will be apparent from the description, or may be learned by practice of the invention. The objectives and other advantages of the invention will be realized and attained by the structure particularly pointed out in the written description and claims thereof as well as the appended drawings.

To achieve these and other advantages and in accordance with the purpose of the present invention, as embodied and broadly described, a method of processing a video signal according to the present invention according to claim 1 is provided.

To further achieve these and other advantages and in accordance with the purpose of the present invention, an apparatus for processing a video signal according to claim 3 is provided.

Developments are set forth in the respective dependent claims.

### MODE FOR INVENTION

Reference will now be made in detail to the preferred embodiments of the present invention, examples of which are illustrated in the accompanying drawings. First of all, terminologies in the present invention can be construed as the following references. And, terminologies not disclosed in this specification can be construed as the following meanings and concepts matching the technical idea of the present invention. Therefore, the configuration implemented in the embodiment and drawings of this disclosure is just one most preferred embodiment of the present invention and fails to represent all technical ideas of the present invention. Thus, it is understood that various modifications/variations and equivalents can exist to replace them at the timing point of filing this application.

Coding in the present invention should be understood as the concept for including both encoding and decoding. And a pixel value difference should be understood as a sum of an absolute value of a pixel value difference.

In the following description, a template usable for prediction of a current block is explained.

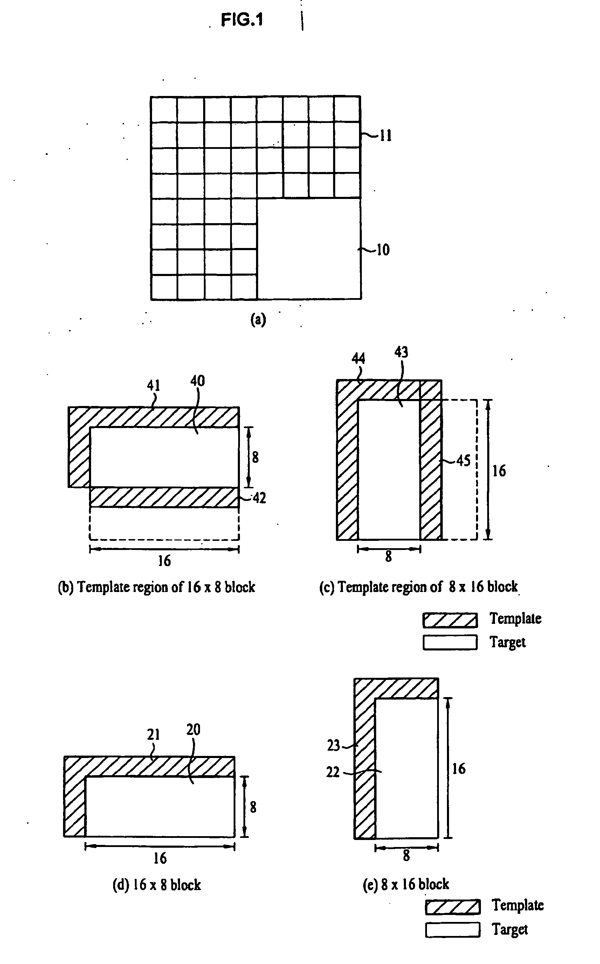

FIG. 1 shows an example of a template region and a target region.

Referring to FIG. 1(a), a target region (10) may mean a current block to be predicted by performing template matching. A template region (11) is a region adjacent to the target region and may include an already-coded region. Generally, the template region (11) can include a region adjacent to a left side and upper end edge of the target region (10).

Moreover, a region adjacent to a right side or lower end of the current block is coded ahead of the current block to be used as a template region in performing template matching.

For instance, referring to FIG. 1(b), a current block (40) is 16*8. A template region of the current block includes a lower end part (42) of the current block as well as an already coded region (41) adjacent to a left side and upper end of the current block.

Referring to FIG. 1(c), a template region of a current block (43) can include a region (45) adjacent to a right side of the current block as well as an already decoded region (44) adjacent to a left side and upper end of the current block.

It is able to set up a shape of a target according to a shape of a macroblock partition. And, it is able to set up a template region to enable a shape resulting from combining a template region and a target region to be equal to the shape of the target.

For instance, if a shape of a macroblock partition is 16*8 in FIG. 1(d), a target shape (20) can be defined into 16*8 block instead of 8*8 block. Further, if a shape of a target is defined into 16*8 block, it is able to set up a template region (21) to have the same shape of a shape resulting from combining a template region and a target region together, i.e., a rectangular shape.

If a shape of a macroblock partition is 8*16, a target shape (22) can be defined into 8*16 and a template region (23) can be set as shown FIG. 1(e).

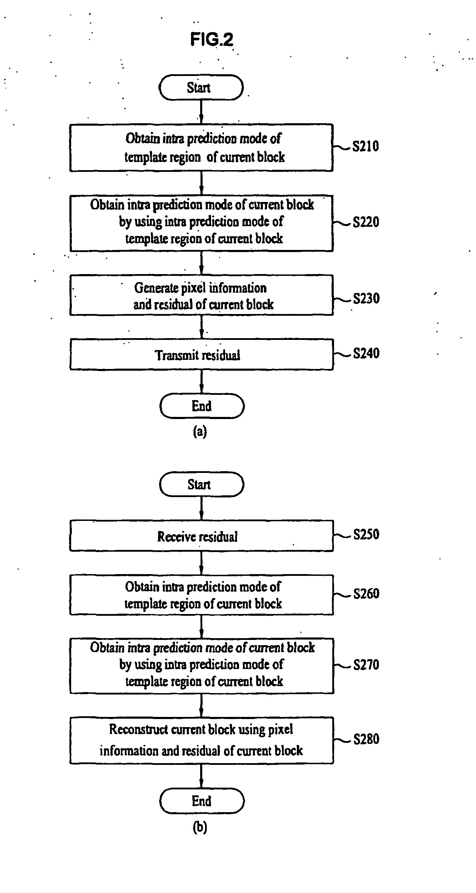

FIG. 2 is a flowchart of a sequence for a decoder to determine an intra prediction mode of a current block using a template region according to a first embodiment of the present invention.

Referring to FIG. 2(a), an encoder extracts an intra prediction mode of a template region adjacent to a current block [S210]. It is able to use the extracted intra prediction mode of the template region adjacent to the current block as an intra prediction mode of the current block using mutual similarity between the current block and the template region. Therefore, it is able to obtain the intra prediction mode of the current block [S220]. A pixel value and residual of the current block are generated in the intra-prediction mode of the current block [S230]. The residual of the current block is transferred to a decoder only [S240] but the intra prediction mode of the current block is not transmitted. Therefore, it is able to reduce an information size of the block transferred to the decoder.

Referring to FIG. 2(b), the decoder receives the residual of the current block [S250]. Like the encoder, the decoder obtains an intra prediction mode of the template region adjacent to the current block [S260] and then obtains the intra prediction mode of the current block [S270]. The current block is then reconstructed using a pixel value of the current block according to the obtained intra prediction mode of the current block and the received residual of the current block [S280].

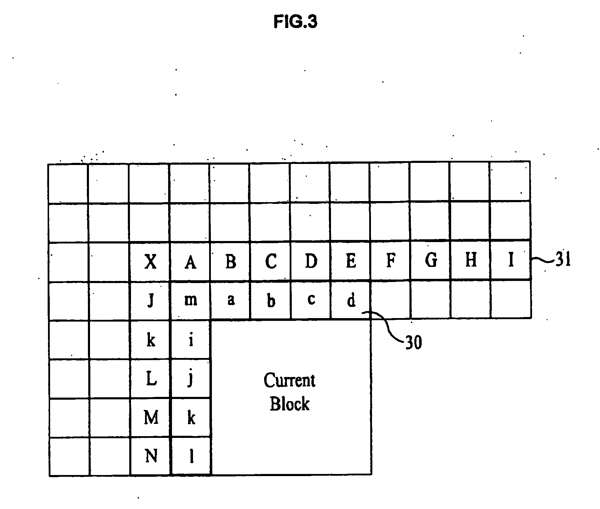

FIG. 3 shows a template region adjacent to a current block and pixels neighboring to the corresponding template region, which are used it obtaining an intra prediction mode of the template region adjacent to the current block according to a first embodiment of the present invention.

First of all, a∼m region (30) is adjacent to a left side and upper end of a current block and is also adjacent to a corner pixel located at a left upper end of the current block. The a∼m region (30) are already coded pixels and can be regarded as a template region. In FIG. 3, a size of the template region is 1. The size of the template region is n (n is a natural number) and is adjustable. A∼X region (31) includes coded pixels adjacent to left side (J∼N), upper end (A∼E), left upper end (X) and right upper end (F∼I) centering on the template region.

In order to select an optimal prediction mode, a pixel value difference between the a∼m region and the A∼X region is calculated. In case of a vertical mode, for example, a pixel value difference becomes absolute [(m-A)+(i-A)+(j-A)+(k-A)+(1-A)+(a-B)+(b-C)+(c-D)+(d-E)]. Likewise, the pixel value difference will be calculated for 9 kinds of the intra prediction modes. And, the intra prediction mode, which minimizes the pixel value difference, will become the intra prediction mode of the template region. Therefore, it is able to determine the intra prediction mode of the current block using the mutual similarity between the template region and the current block.

### INDUSTRIAL APPLICABILITY

While the present invention has been described and illustrated herein with reference to the preferred embodiments thereof, it will be apparent to those skilled in the art that various modification and variations can be made therein without departing from the spirit and scope of the invention. Thus, it is intended that the present invention covers the modifications and variations of this invention that come within the scope of the appended claims and their equivalents.

## Claims

1. A method of processing a video signal, comprising:
obtaining (S260) an intra prediction mode of a template region (11, 21, 23, 30, 41, 44) adjacent to a current block (10, 20, 22, 40, 43) by calculating a pixel value difference between pixels of the template region and neighboring pixels of the template region, the template region being a region adjacent to a left side and upper end of the current block, and the neighboring pixels of the template region including pixels at a left side, an upper end, a left upper end and a right upper end of the template region;
obtaining (S270) an intra prediction mode of the current block by using the intra prediction mode of the template region as the intra prediction mode of the current block; and
obtaining (S280) a prediction value of the current block using the intra prediction mode of the current block.

2. The method of claim 1,
wherein the intra prediction mode of the template region is an intra prediction mode minimizing the pixel value difference.

3. An apparatus for processing a video signal, comprising:
a prediction mode determining unit configured to obtain an intra prediction mode of a template region (11, 21, 23, 30, 41, 44) adjacent to a current block-(10, 20, 22, 40, 43) by calculating a pixel value difference between pixels of the template region and neighboring pixels of the template region, and to obtain an intra prediction mode of the current block by using the intra prediction mode of the template region as the intra prediction mode of the current block; and
a predicting unit configured to obtain a prediction value of the current block using the prediction mode of the current block,
wherein the template region is a region adjacent to a left side and upper end of the current block, and the neighboring pixels of the template region include pixels at a left side, an upper end, a left upper end and a right upper end of the template region.

4. The apparatus of claim 3, wherein the intra prediction mode of the template region is an intra prediction mode minimizing the pixel value difference.

## Patentansprüche

1. Verfahren zur Verarbeitung eines Videosignals, umfassend:
Gewinnen (S260) einer Intraprädiktionsbetriebsart eines Schablonenbereichs (11, 21, 23, 30, 41, 44), der einem momentanen Block (10, 20, 22, 40, 43) benachbart ist, durch Berechnen einer Pixelwertdifferenz zwischen Pixeln des Schablonenbereichs und benachbarten Pixeln des Schablonenbereichs, wobei der Schablonenbereich ein Bereich ist, der einen linken Seite und einem oberen Ende des momentanen Blocks benachbart ist, und die benachbarten Pixel des Schablonenbereichs Pixel auf einer linken Seite, einem oberen Ende, einem linken oberen Ende und einem rechten oberen Ende des Schablonenbereichs umfassen;
Gewinnen (S270) einer Intraprädiktionsbetriebsart des momentanen Blocks unter Verwendung der Intraprädiktionsbetriebsart des Schablonenbereichs als die Intraprädiktionsbetriebsart des momentanen Blocks; und
Gewinnen (S280) eines Prädiktionswerts des momentanen Blocks unter Verwendung der Intraprädiktionsbetriebsart des momentanen Blocks.

2. Verfahren gemäß Anspruch 1,
wobei die Intraprädiktionsbetriebsart des Schablonenbereichs eine Intraprädiktionsbetriebsart ist, die die Pixelwertdifferenz minimiert.

3. Vorrichtung zur Verarbeitung eines Videosignals, umfassend:
eine Prädiktionsbetriebsartbestimmungseinheit, die konfiguriert ist, um eine Intraprädiktionsbetriebsart eines Schablonenbereichs (11, 21, 23, 30, 41, 44), der einem momentanen Block (10, 20, 22, 40, 43) benachbart ist, durch Berechnen einer Pixelwertdifferenz zwischen Pixeln des Schablonenbereichs und benachbarten Pixeln des Schablonenbereichs zu gewinnen, und um eine Intraprädiktionsbetriebsart des momentanen Blocks unter Verwendung der Intraprädiktionsbetriebsart des Schablonenbereichs als die Intraprädiktionsbetriebsart des momentanen Blocks zu gewinnen; und
eine Prädiktionseinheit, die konfiguriert ist, um einen Prädiktionswert des momentanen Blocks unter Verwendung der Prädiktionsbetriebsart des momentanen Blocks zu gewinnen;
wobei der Schablonenbereich ein Bereich ist, der einer linken Seite und einem oberen Ende des momentanen Blocks benachbart ist, und die benachbarten Pixel des Schablonenbereichs Pixel auf einer linken Seite, einem oberen Ende, einem linken oberen Ende und einem rechten oberen Ende des Schablonenbereichs umfassen.

4. Vorrichtung gemäß Anspruch 3, wobei die Intraprädiktionsbetriebsart des Schablonenbereichs eine Intraprädiktionsbetriebsart ist, die die Pixelwertdifferenz minimiert.

## Revendications

1. Procédé de traitement d'un signal vidéo, comprenant :
l'obtention (S260) d'un mode d'intra-prédiction d'une région modèle (11, 21, 23, 30, 41, 44) adjacente à un bloc courant (10, 20, 22, 40, 43) en calculant une différence de valeurs de pixels entre des pixels de la région modèle et des pixels voisins de la région modèle, la région modèle étant une région adjacente à un côté gauche et une extrémité supérieure du bloc courant, et les pixels voisins de la région modèle incluant des pixels sur un côté gauche, une extrémité supérieure, une extrémité supérieure gauche et une extrémité supérieure droite de la région modèle ;
l'obtention (S270) d'un mode d'intra-prédiction du bloc courant en utilisant le mode d'intra-prédiction de la région modèle comme le mode d'intra-prédiction du bloc courant ; et
l'obtention (S280) d'une valeur de prédiction du bloc courant en utilisant le mode d'intra-prédiction du bloc courant.

2. Procédé selon la revendication 1,
dans lequel le mode d'intra-prédiction de la région modèle est un mode d'intra-prédiction minimisant la différence de valeurs de pixels.

3. Appareil de traitement d'un signal vidéo, comprenant :
une unité de détermination de mode de prédiction configurée pour obtenir un mode d'intra-prédiction d'une région modèle (11, 21, 23, 30, 41, 44) adjacente à un bloc courant (10, 20, 22, 40, 43) en calculant une différence de valeurs de pixels entre des pixels de la région modèle et des pixels voisins de la région modèle, et pour obtenir un mode d'intra-prédiction du bloc courant en utilisant le mode d'intra-prédiction de la région modèle comme le mode d'intra-prédiction du bloc courant ; et
une unité de prédiction configurée pour obtenir une valeur de prédiction du bloc courant en utilisant le mode de prédiction du bloc courant,
dans lequel la région modèle est une région adjacente à un côté gauche et une extrémité supérieure du bloc courant, et les pixels voisins de la région modèle incluent des pixels sur un côté gauche, une extrémité supérieure, une extrémité supérieure gauche et une extrémité supérieure droite de la région modèle.

4. Appareil selon la revendication 3, dans lequel le mode d'intra-prédiction de la région modèle est un mode d'intra-prédiction minimisant la différence de valeurs de pixels.
